# EUROPÄISCHE PATENTSCHRIFT

(11) **EP 1 049 764 B1**
(45) Veröffentlichungstag und Bekanntmachung des Hinweises auf die Patenterteilung: **17.08.2005**
(21) Anmeldenummer: 99904796.2
(22) Anmeldetag: 19.01.1999
(51) Int. Cl.: C12C 11/00, C12M 1/36

(54) **GÄRPROZESS-STEUERUNG UND GÄRGEFÄSS**
FERMENTATION PROCESS CONTROL AND FERMENTATION TANK
PROCEDE DE CONTROLE DE FERMENTATION ET RECIPIENT DE FERMENTATION

(30) Priorität: 20.01.1998 DE 19801988; 26.06.1998 DE 19828688
(43) Veröffentlichungstag der Anmeldung: 08.11.2000
(73) Patentinhaber: Anton Steinecker Maschinenfabrik GmbH, 85356 Freising-Attaching (DE)
(72) Erfinder: STIPPLER, Kurt, D-85417 Marzling (DE); WASMUHT, Klaus-Karl, D-92792 Ellingen (DE); HEGE, Ulrich, D-85356 Freising (DE)
(74) Vertreter: Grünecker, Kinkeldey, Stockmair & Schwanhäusser Anwaltssozietät
(86) Internationale Anmeldenummer: PCT/EP1999/000292
(87) Internationale Veröffentlichungsnummer: WO 1999/037748

(56) Entgegenhaltungen:
- DD-A- 81 079
- DE-A- 3 920 397
- US-A- 4 557 186
- US-A- 4 661 845
- TAKAHASHI T ET AL: "In-situ turbidity measurement during fermentation." BREWING & DISTILLING INTERNATIONAL, Bd. 13, Nr. 7, 1983, Seiten 36-37, XP002106136

## Beschreibung

Die Erfindung betrifft ein Verfahren zur Steuerung des Gärprozesses, insbesondere bei der alkoholischen Getränkeherstellung, ein Gärgefäß und eine Vorrichtung und ein Verfahren zur Steuerung der Gärprozesse in mehreren Gärgefäßen.

Wenn bei der Erzeugung von Getränken ein Gärungsprozeß erforderlich ist, wie z. B. bei der Herstellung von Bier, wird er im allgemeinen in einem Gärgefäß durchgeführt, das ein offener oder ein geschlossener Tank sein kann. Bei der Bierherstellung z.B. wird die gekochte und abgekühlte Würze in das Gärgefäß geführt und Hefe dazugegeben. Dadurch beginnt der Gärprozeß. Bei der Gärung handelt es sich um Stoffwechselvorgänge, bei denen Enzyme tätig werden, wodurch Wärme freigesetzt wird, so daß die Temperatur der gärenden Substanz steigt. Die Temperaturen müssen durch Kühlung in gewünschten Bereichen gehalten werden. Dazu sind entweder innerhalb oder außerhalb am Gärgefäß Kühlschlangen vorgesehen, die von einer Kühlflüssigkeit durchflossen werden. Durch Messung der Temperatur und Steuerung der Kühlung kann bei bekannten Verfahren ein vorgegebener Temperaturverlauf eingehalten werden.

Um den Gärprozeß zusätzlich überwachen zu können, kann bei den bekannten Verfahren mit Hilfe einer Schaugläschenprobe das Stadium der gärenden Substanz überprüft werden, um über das Absetzverhalten der Hefe den Abschluß des Gärprozesses festlegen zu können. Auch kann eine Probenentnahme an der gärenden Substanz erfolgen und mit Hilfe einer Saccharometeranzeige gemessen werden, wie der Gärprozeß fortschreitet. Konventionelle Gärprozesse der Bierherstellung sind z.B. im "Katechismus der Brauereipraxis", Karl Lense, Verlag Hans Carl, Nümberg, 16. Auflage, 1996 beschrieben.

Um den Gärungsprozess zu überwachen können auch an einer Probe der gärenden Substanz oder in der gärenden Substanz (in situ) optische Signale aufgenommen werden; vgl. US 4 661 845 und Takahashi et al., Brewing and Distilling International, 13(7) 1983, S. 36-37.

Nach der Gärung wird die gegorene Flüssigkeit entweder weiterhin in dem Gärtank gelagert (der Gärtank wird dann als Unitank bezeichnet) oder in entsprechende Lagertanks überführt. Im Anschluß daran oder in Vorbereitung eines weiteren Gärprozesses muß das Gärgefäß gereinigt werden. Dies geschieht durch Versprühen von Reinigungsflüssigkeit im Gärgefäß.

Um den Gärprozeß zu überwachen, stehen also im speziellen, wenn geschlossene Tanks zur Gärung eingesetzt werden, während des Gärprozesses nur die gemessene Temperatur oder ggf. der Extraktgehalt oder eine CO2 Messung zur Verfügung. Der tatsächliche Verlauf der Gärung ist jedoch von vielen Parametern abhängig, z.B. der verwendeten Würze , dem Zustand der eingesetzten Hefe, den Lagerungsbedingungen oder ähnlichem. Da dementsprechend kein Gärprozeß exakt dem anderen gleicht, kann nur mit einem vorgegebenen Temperaturverlauf der Gärprozeß gesteuert werden.

Bei der Reinigung des Gärgefäßes wird eine bestimmte vorgegebene Zeit lang Reinigungsflüssigkeit im Gefäß versprüht. Dabei kann es aber dazu kommen, daß die Reinigung unvollständig ist oder aber eine zu lange Reinigungsdauer vorliegt, was kosten- und zeitintensiv ist. Gerade bei den heutigen schnellen Verfahren sind diese Parameter jedoch von entscheidender Bedeutung.

Es ist ausgehend von dem beschriebenen Stand der Technik Aufgabe der vorliegenden Erfindung, ein Verfahren zur Steuerung des Gärprozesses, ein Gärgefäß und eine Vorrichtung und ein Verfahren zur Steuerung des Gärprozesses in einer Vielzahl von Gärgefäßen anzugeben, mit welchen der Gärprozeß optimal beeinflußt werden kann, ohne daß eine ständige Beobachtung durch Personen notwendig ist, so daß die Gärprozeßführung vereinfacht wird. Diese Aufgabe wird durch ein Verfahren mit den Merkmalen des Anspruches 1, ein Gärgefäß mit den Merkmalen des Anspruches 22 eine Vorrichtung mit den Merkmalen des Anspruches 45 und ein Verfahren mit den Merkmalen des Anspruchs 41 gelöst.

Erfindungsgemäß ist vorgesehen, daß von dem Inneren des Gärgefäßes kontinuierlich oder in Intervallen vom oberen Bereich aus optische Signale aufgenommen werden, die während des Gärprozesses die Oberfläche der gärenden Substanz oder - bei leerem Gärgefäß - den Boden und zumindest einen Teil der Seitenwände des Gärgefäßes wiedergeben und daß die Signale zur Steuerung des Gärprozesses verwendet werden.

Durch die Erfindung ist die Überwachung des Inneren des Gärgefäßes, sei es offen oder verschlossen, möglich, ohne daß eine direkte Beobachtung durch eine Person notwendig ist. Die optischen Signale können z.B. als Bild auf einer Bildanzeige betrachtet werden, so daß eine Bedienperson den Prozeß beobachten und ggf. eingreifen kann.

Andererseits ist es auch möglich, diese optischen Signale elektronisch zu verarbeiten und in Art eines Regelkreises die Parameter des Gärprozesses zu beeinflussen.

Die Erfindung macht sich die Tatsache zunutze, daß sich während des Gärprozesses die Oberfläche der gärenden Würze in charakteristischer Weise (siehe z.B. "Katechismus der Brauereipraxis", Karl Lense, Verlag Hans Carl, Nümberg, 16. Auflage, 1996, Seiten 242 und 243, Punkt 827) verändert. Je nach Stadium der Gärung wechselt die Oberfläche die Farbe und die Struktur. Es bilden sich in bekannter Weise Bläschen und Schaum, die sich z.B. mit der Symmetrie des Gärgefäßes von außen nach innen ausbreiten. Diese Veränderungen spiegeln sich in den optischen Signalen wieder, die von der Oberfläche der gärenden Substanz aufgenommen werden. Werden diese Signale an eine optische Bildanzeige gegeben, so kann eine Bedienperson den Gärprozeß direkt beobachten, auch wenn das Gärgefäß geschlossen ist. Andererseits können derartige optische Signale elektronisch verarbeitet werden und mit bekannten Mustern bzw. einem Farbhistogramm verglichen werden.

Das erfindungsgemäße Verfahren ermöglicht also eine genaue Überwachung des Gärprozesses und eine Einstellung der notwendigen Parameter, z.B. der Kühlung oder des Druckes, in Abhängigkeit der aufgenommenen Signale und ermöglicht so eine Optimierung des Gärprozesses. So kann z.B. Zeit eingespart werden, wenn beobachtet wird, daß der Gärprozeß abgeschlossen ist, oder Energie eingespart werden, wenn beobachtet wird, daß keine weitere Kühlung notwendig ist.

Bei einer eventuellen anschließenden Lagerung der gegorenen Substanz in dem Gärgefäß können optische Signale von der Oberfläche der gegorenen Substanz aufgenommen und die Lagerung überwacht werden.

Die optischen Signale können auch während des vorbereitenden Reinigungsprozesses bzw. der Nachreinigung des Gärgefäßes zur Überwachung eingesetzt werden. Die Menge der notwendigen Reinigungsflüssigkeit und die Dauer der Reinigung können direkt in Abhängigkeit des Reinigungszustandes der Innenflächen des Gärgefäßes geregelt werden. Ist das innere des Gärgefäßes sauber, so wird der Reinigungsprozeß abgebrochen , so daß der Abwasseranfall reduziert und eine weitere energie-, zeit- und materialverschwendende Reinigung vermieden wird. Ebenso wie während des Gärprozesses können während des Reinigungsprozesses die optischen Signale direkt auf einer Bildanzeigevorrichtung von einer Bedienerperson überwacht werden oder elektronisch verarbeitet werden, um den Reinigungsprozeß zu automatisieren.

Die Aufnahme der optischen Signale kann mit Hilfe einer Kamera durchgeführt werden. Die Kamera kann entweder von außen, z.B. durch ein Schauglas hindurch, von der Deckelseite bei einem geschlossenen Gärgefäß aufnehmen. Diese Lösung hat den Vorteil, daß auch bereits bestehende Gärtanks, die entsprechende Schaugläser aufweisen, mit einer solchen Kamera ausgerüstet werden können. Es kann auch vorgesehen sein, die Kamera im inneren des Gefäßes einzusetzen, wobei sich hier insbesondere eine Mikrokamera eignet, die im oberen Bereich des Gärgefäßes geeignet angeordnet wird. Die Signale dieser Mikrokamera können mit entsprechenden Kabelverbindungen aus dem Gärgefäß herausgeführt werden. Gemäß einer anderen vorteilhaften Ausführungsform werden die optischen Signale mit Hilfe eines Endoskops aus dem Gärgefäß herausgeführt, und außerhalb des Gärgefäßes von einer Aufnahmeeinrichtung aufgenommen. Mit Hilfe einer derartigen Endoskopieeinrichtung sind die hygienischen Anforderungen an die Sterilität auf leichte Weise einzuhalten, da keine mechanischen oder beweglichen Teile vorhanden sind und ein Endoskop eine sehr kleine Bauform aufweisen kann.

Das optische Signal kann im sichtbaren Spektralbereich aufgenommen werden, wobei das Innere des Gärgefäßes beleuchtet wird. Die Beleuchtung kann von außen, z.B. ebenfalls durch ein Schauglas hindurch, erfolgen oder aber mit einer im Inneren angeordneten Lichtquelle. Dabei kann dann, wenn die Beleuchtung mit der Kamera synchronisiert ist, z.B. ein Blitzlicht eingesetzt werden, das eine besonders große Helligkeit erzeugt, so daß klare Bilder aufgenommen werden können. Auf diese Weise läßt sich direkt die Oberfläche der gärenden Substanz beobachten und zur Steuerung des Gärprozesses eingesetzen. Zusätzlich oder altemativ werden die optischen Signale im infraroten Spektralbereich erfaßt. Dies ermöglicht die Überwachung der Wärmeverteilung der gärenden Substanz, um z.B. die Kühlung optimal einstellen zu können und Konvektionen der gärenden Substanz zu überwachen bzw. zu steuem.

Die Aufnahmeeinrichtung zur Aufnahme der optischen Signale kann in einer festen Höhe innerhalb des Gärgefäßes angeordnet sein. Es kann dann auf leichte Weise beobachtet werden, in welcher Höhe sich Schaum auf der gärenden Substanz bildet, z.B. durch Auswertung der Größe des Bildausschnittes, der von der gärenden Substanz ausgefüllt wird. Bei einer anderen Ausführungsform wird die Lage der optischen Aufnahmeeinrichtung der Höhe der gärenden Substanz derart angepaßt, daß immer ein konstanter Abstand zwischen der Aufnahmeeinrichtung und der gärenden Substanz vorliegt Dies ermöglicht eine genaue Beobachtung der Oberflächenstruktur bzw. -farbe der gärenden Substanz.

Es versteht sich außerdem, daß die genannten Systeme (Kamera von außen oder in das Gärgefäß eingesetzte Kamera) auch mit geeignet angeordneten Spiegeln zusammenarbeiten können, so daß z.B. auch die Innenseite des Deckels beobachtet werden kann, was bei der Reinigung von Vorteil ist.

Die optischen Signale können zur Regelung der einstellbaren Parameter des Gärprozesses benutzt werden. Besonders vorteilhaft ist die Regelung der Kühlung des Gärgefäßes, da die Temperatur von entscheidender Bedeutung für den Gärprozeß ist. Bei geschlossenem Gärgefäß können die optischen Signale zur Druckregelung eingesetzt werden. Der Druck ist ebenso ein wichtiger Parameter bei der Gärung, da er die Schaumbildung entscheidend beeinflußt.

Neben der Farbe einzelner Bereiche der Oberfläche der gärenden Substanz kann auch die Textur zur Auswertung eingesetzt werden. So kann z.B. die Größe von Schaumbläschen durch Vergleich mit entsprechenden Referenzwerten über das Fortschreiten des Gärprozesses Aufschluß geben.

Neben den optischen Signalen können auch weitere Parameter, die auf konventionelle Weise in dem Gärgefäß gemessen werden, z.B. der Extraktgehalt und die Temperatur, zur Überwachung zusätzlich eingesetzt werden.

Werden die optischen Signale elektronisch verarbeitet und ausgewertet, so können diese Signale z.B. mit entsprechenden Referenzsignalen, die in einem Speicher abgelegt sind, verglichen werden, um den Gärprozeß zu überwachen, In anderer vorteilhafter Ausgestaltung werden bildanalytische Verfahren zur Auswertung der optischen Signale eingesetzt. Solche bildanalytischen Verfahren ermöglichen z.B. das Bestimmen der Farbe einzelner Bereiche der Oberfläche. Andererseits können die Formen der Oberflächentextur mit bildverarbeitenden Verfahren bestimmt werden. Es kann z.B, die Größe und Form eines Bereiches bestimmt werden, in dem sich Bläschen gebildet haben, um den Zeitablauf des Gärprozesses zu überwachen.

Werden die optischen Signale elektronisch verarbeitet, so kann durch Vergleich mit einem entsprechenden Schwellwert bestimmt werden, ob der Gärprozeß in unerwünschter Form verläuft, um ein entsprechendes Wamsignal an eine Bedienerperson geben zu können. So wird z.B. in Abhängigkeit der gärenden Substanz ein maximaler Zeitraum festgelegt werden, in welchem eine bestimmte Farbe oder eine bestimmte Strukturform der Oberflächentextur erreicht werden soll. Bei Nichterreichen dieses Wertes wird ein Warnsignal abgegeben.

Bei dem erfindungsgemäßen Gärgefäß ist zur Durchführung des erfindungsgemäßen Verfahrens eine optische Aufnahmeeinrichtung vorgesehen, die in einer Höhe innerhalb eines Gärgefäßes angeordnet ist, die während des Gärprozesses oberhalb der gärenden Substanz liegt, so daß die Oberfläche der gärenden Substanz oder - bei leerem Gärgefäß - der Boden und ein Teil der Seitenwände des inneren des Gärgefäßes aufgenommen werden können.

Je nach Anforderung ist die Aufnahmeeinrichtung zur Aufnahme des sichtbaren Spektralbereiches oder/und des infraroten Spektralbereiches geeignet. Soll der sichtbare Spektralbereich der optischen Signale ausgewertet werden, so ist vorteilhafterweise innerhalb des Gärgefäßes eine Leuchteinrichtung vorgesehen. Je nach Anforderung kann die Lage und Ausrichtung der Leuchteinrichtung mittig oder seitlich versetzt im Gärtank vorgesehen sein. Eine seitliche Versetzung ermöglicht durch Schattenbildung eine bessere Auflösung der Höhenstruktur, während eine mittige Anordnung eine bessere Ausleuchtung garantiert. Es versteht sich, daß die Leuchteinrichtung auch außen am Gärgefäß angeordnet werden kann, z.B. im Bereich eines im Deckel vorhandenen Schauglases. Die Beleuchtung wird mit der Bildaufnahme koordiniert. Z. B. kann die Beleuchtungseinrichtung ein Blitzlicht sein.

Die optische Aufnahmeeinrichtung kann fest in dem Gärgefäß installiert sein. Zur genaueren Betrachtung der Oberfläche der gärenden Substanz kann es vorteilhaft sein, wenn die Höhe jedoch verstellbar ist. Dies kann vorteilhafterweise mit einer Teleskopeinrichtung ermöglicht werden. Die Aufnahmeeinrichtung kann mittig oder seitlich versetzt angeordnet bzw. ausgerichtet sein. Ein besonders großer Aufnahmebereich ergibt sich bei mehr mittiger Anordnung, wohingegen die Auflösung von unterschiedlichen Höhenstrukturen bei seitlicher Anordnung bzw. Ausrichtung größer sein kann.

Zur elektronischen Überwachung bzw. Regelung wird gemäß einer weiteren vorteilhaften Ausführungsform ein Mikroprozessor eingesetzt. Dieser Mikroprozessor kann eine Regelkreiseinheit umfassen, die z.B. mit den Kühlaggregaten des Gärgefäßes verbunden ist, um die Temperatur zu regeln. Altemativ oder zusätzlich kann der Mikroprozessor mit Ventilen verbunden sein, die eine Regelung des Druckes in dem Gärgefäß ermöglichen.

Ein erfindungsgemäßes Verfahren zur Steuerung der Gärprozesse in einer Vielzahl von Gärgefäßen, die entweder geschlossen und mit einem Schauglas versehen oder offen sind, kann das oben beschriebene Verfahren vorteilhaft eingesetzt werden, wobei für die Vielzahl von Gärgefäßen mindestens eine Aufnahmeeinrichtung eingesetzt wird.

Bei diesem erfindungsgemäßen Verfahren ist nur eine geringere Anzahl, bevorzugt überhaupt nur eine Aufnahmeeinrichtungen notwendig, um eine größere Anzahl von Gärgefäßen zu überwachen. Auf diese Weise kann auch in einem großen Gärkeller mit vielen Gärgefäßen der Prozeß effektiv überwacht werden. Bei Gärkellern, wie sie in heutigen Großbrauereien vorkommen, in denen sich bis zu 100 Gärgefäße befinden können, ist eine derartige effektive Steuerung von großem Vorteil. Alle Auswerteeinrichtungen bzw. Bildschirme, die z.B. von der Aufnahmeeinrichtung mit Signalen versorgt werden, müssen nur einfach oder in geringer Anzahl vorhanden sein. Die mindestens eine bewegliche Aufnahmeeinrichtung wird dabei von einem Gärgefäß zum anderen bewegt, um das Innere des jeweiligen Gärgefäßes aufzunehmen. Dabei kann je nach Anforderung vorgesehen sein, daß dieser Transport automatisiert gesteuert wird oder auf Einwirken eines Benutzers hin die Aufnahmeeinrichtung von einem zu einem anderen Gärgefäß bewegt wird. Bei offenen Gärgefäßen wird z. B. die Aufnahmeeinrichtung oberhalb des jeweiligen Gärgefäßes plaziert. Bei geschlossenen Gärgefäßen mit einem Schauglas wird die Aufnahmeeinrichtung vor dem jeweiligen Schauglas plaziert, um durch dieses hindurch das innere des jeweiligen Gärgefäßes aufzunehmen.

Die Transporteinrichtung für die Aufnahmeeinrichtung kann verschiedene Ausgestaltungen haben. Als besonders vorteilhaft hat sich ein Roboter erwiesen, der eine sehr flexible Fortbewegung der Aufnahmeeinrichtung ermöglicht.

In einer anderen vorteilhaften Ausgestaltung wird die Aufnahmeeinrichtung verfahrbar von einer Schieneneinrichtung getragen, so daß eine einfache Fortbewegung ermöglicht ist. Die Schiene kann z.B. oberhalb der Gärgefäße aufgehängt sein und sorgt so für eine präzise Plazierung.

Bei offenen Gärgefäßen kann es von Vorteil sein, wenn die Aufnahmeeinrichtung zusätzlich in den jeweiligen Gärtank abgesenkt wird. Auf diese Weise kann eine genauere Aufnahme der Oberfläche der gärenden Substanz erhalten werden.

Ist die mindestens eine Aufnahmeeinrichtung zur Aufnahme von optischen Signalen im sichtbaren Bereich ausgestaltet, so kann vorteilhafterweise eine Leuchteinrichtung vorgesehen sein, die zusammen mit der Aufnahmeeinrichtung bewegt wird. Auf diese Weise kann immer genau das Gärgefäß beleuchtet werden, das gerade von der Aufnahmeeinrichtung inspiziert wird. Bei geschlossenen Gärgefäßen muß dazu die Lage der Leuchteinrichtung, der Aufnahmeeinrichtung und des Schauglases bzw. der Schaugläser des jeweiligen Gärgefäßes aufeinander abgestimmt werden.

Werden die Signale der mindestens einen Aufnahmeeinrichtung mit Hilfe eines Mikroprozessors verarbeitet, so kann vorgesehen sein, daß dieser Mikroprozessor zusätzlich die Steuerung für die Transporteinrichtung für die mindestens eine Aufnahmeeinrichtung übernimmt. Auf die Weise ist eine optimale Sychronisation der Stellung der Aufnahmeeinrichtung und der optischen Signale möglich.

Werden die Signale der Aufnahmeeinrichtung z.B. zur Erzeugung eines Bildschirmsignales verwendet, so ist es dann möglich, daß ein Bildschirm im Wechsel für die Signale aus je einem der Gefäße eingesetzt wird Natürlich ist es ebenso möglich, daß für jedes Gärgefäß ein einzelner Bildschirm vorgesehen ist, dessen Bild immer dann aktualisiert wird, wenn die Aufnahmeeinrichtung eine Neuaufnahme des jeweiligen Gärgefäßes erzeugt.

Wie oben für die Steuerung eines Gärtanks mit einer individuellen Aufnahmeeinrichtung beschrieben, sind auch bei einer Vorrichtung zur Steuerung einer Vielzahl von Gärgefäßen die optischen Signale zur Regelung der Gärparameter, z.B. der Temperatur bzw. des Druckes, im einzelnen Gärgefäß einsetzbar. Dazu kann z.B. die Auswerteeinheit die Steuerung der Kühlflüssigkeit bzw. von Ventilen der einzelnen Gärgefäße abhängig von der optischen Aufnahme des entsprechenden Gärgefäßes übernehmen.

Das erfindungsgemäße Steuerungsverfahren wird anhand der beiliegenden Figuren erläutert, die Ausführungsformen der erfindungsgemäßen Vorrichtungen darstellen. Dabei zeigt
- Figur 1: eine Ausführungsform eines erfindungsgemäßen Gärgefäßes und
- Figur 2: eine schematische Darstellung einer erfindungsgemäßen Ausführungsform einer Vorrichtung zur Steuerung des Gärprozesses in einer Vielzahl von Gärgefäßen.

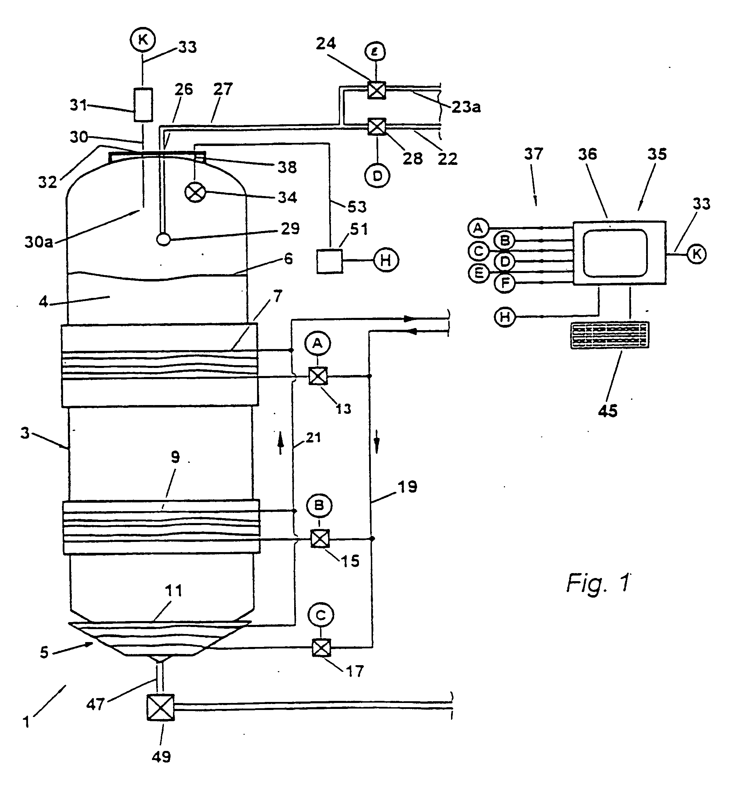

In der schematischen Figur 1 bezeichnet 1 die Gesamtheit der Gäranlage. 3 bezeichnet das Gärgefäß, das bei der gezeigten Ausführungsform ein zylindro-konischer geschlossener Tank mit einem konischen Bodenbereich 5 ist. Ein solcher Tank kann z.B. bei der Bierherstellung eine Höhe von einigen Metern erreichen. Oberhalb des konischen Bereiches 5 schließt sich ein zylindrischer Bereich an, der nach oben durch einen Deckel abgeschlossen ist. Der so gebildete Gärtank 3 weist drei Kühlzonen 7, 9 und 11 auf, die dadurch verwirklicht sind, daß um den Außenumfang herum an den entsprechenden Stellen Kühlkanäle verwirklicht sind. Zur Öffnung dieser Kühlkanäle dienen Ventile 13, 15 und 17. Die Kühlmittelzuführung 19 und die Kühlmittelabführung 21 sind an eine nicht näher dargestellte Kälteanlage angeschlossen, die eine Kühlflüssigkeit in geeigneter Temperatur zur Verfügung stellt.

Im Bodenbereich des Gärtanks 3 befindet sich ein Abfluß 47 mit einem Ventil 49 zur Abführung der gegorenen Substanz nach dem Gärprozeß.

Die Oberfläche der zu gärenden Substanz 4 ist bei 6 angedeutet.

Im Kopfbereich des Gärtankes 3 ist eine Leitung 27 durch eine Durchführung 26 in den Gärtank 3 hineingeführt. Über ein Ventil 28 kann diese Zuführung 27 mit einer Reinigungsleitung 22 verbunden werden. Diese Leitung stellt die sogen. CIP-Leitung dar, d.h., über diese Leitung kann im Prozeß gereinigt werden bzw. das Reinigungswasser eingeleitet werden. Über dieselbe Leitung kann auch die im Betrieb entstehende Kohlensäure abgeführt werden, wobei dabei das Ventil 28 geschlossen ist und stattdessen das Ventil 24 geöffnet werden kann. Durch geeignete Steuerung des Ventils 24 läßt sich der Druck im Inneren des Gärtanks steuern. Zu diesem Zweck sind im Gärtank Druckaufnehmer angeordnet, die ein Signal an den Rechner 35 geben können, der für eine entsprechende Regelung des Ventils 24 sorgen kann.

In den Kopfbereich des Gärtankes 3 führt weiterhin eine elektrische Zuleitung 53 durch eine Durchführung 38. Die elektrische Zuleitung 53 ist mit einer Lampe 34 verbunden. Zur Stromversorgung dient eine Stromquelle 51.

Schließlich ragt in den Kopfbereich des Gärtankes 3 ein Endoskop 30 durch eine Durchführung 32 mit einem Endbereich 30a. Dieses Endoskop 30 ist derart ausgerichtet, daß mit dem Endbereich 30a die Oberfläche 6 der gärenden Substanz 4 aufgenommen werden kann. Bei der gezeigten Ausführungsform ist die Höhe des Endoskops 30 fest. Am außerhalb des Gärtankes 3 befindlichen Ende des Endoskops 30 befindet sich eine Kameraanlage 31 zur Aufnahme des Signales, das von dem Endoskop 30 weitergeleitet wurde. Über eine elektrische Signalleitung 33 ist diese Kamera 31 mit dem Computer 35 verbunden. Die Signalleitung 33 ist bidirektional, so daß sowohl eine Signalaufnahme des Computers 35 von der Kamera 31 als auch ein Übermitteln eines Steuersignales von dem Computer 35 an die Kamera 31 möglich ist.

Abweichend von der gezeigten Ausführungsform kann vorgesehen sein, daß das Endoskopende 30a in der Höhe verstellbar ist. Anstelle des Endoskops kann eine Mikrokamera in dem Gärtank 3 vorgesehen sein, deren Signal über eine elektrische Leitung aus dem Gärtank 3 hinaus zu dem Computer 35 geführt wird. Natürlich könnte die Kamera auch auf ein am Deckel vorgesehenes Schauglas aufgesetzt werden und durch dieses Schauglas hindurch aufnehmen. Entsprechend könnte auch die Lichtquelle 34 von außen durch ein Schauglas hindurch beleuchten, wenn eine Aufnahme erfolgt.

Der Computer 35 umfaßt in bekannter Weise einen Bildschirm 36 und eine Tastatur 45. Der Computer ist über Signalleitungen 37 direkt bzw. indirekt über SPS (speicherprogrammierbare Steuerung) mit verschiedenen Komponenten der Gäranlage 1 verbunden. Die Signalleitungen 37A, 37B, 37C führen zu den Kühlmittelflußveritilen 13, 15, 17, während die Signalleitung 37D mit dem CIP-Reinigungsventil 28 verbunden ist. Die Signalleitung 37E ist mit den Gasabnführungsventilen 24 verbunden. Sind noch weitere Gasventile vorgesehen, die in der Figur nicht gezeigt sind, so muß eine entsprechend größere Anzahl von Signalleitungen vorgesehen sein.

Schließlich führt eine Signalleitung 37H zur Stromquelle 51 für die Lampe 34. Bei der dargestellten Ausführungsform können die Signalleitungen 37 unidirektional sein, um entsprechende Signale an die korrespondierenden Komponenten zu geben, den Betrieb aufzunehmen bzw. zu unterbrechen.

In Figur 1, der Übersichtlichkeit halber nicht gezeigt, können zusätzliche Sensoren im bzw. am Gärtank zur Messung der Temperatur oder des Extraktgehaltes vorgesehen sein, deren Signal zusätzlich in bekannter Weise zur Charakterisierung des Gärprozesses eingesetzt werden kann. Diese Sensoren können ebenso mit dem Computer 35 verbunden sein und zur Auswertung mit herangezogen werden.

Der Gärprozeß wird im folgenden anhand der Gärung von Würze mit Bierhefe zu Bier erläutert. Die in einem anderen Prozeß gekochte und abgekühlte Würze wird zusammen mit Bierhefe als zu gärende Substanz 4 in den Gärtank 3 eingebracht. Dieser wird dabei etwa zu 2/3 gefüllt. Die Enzyme der Hefe setzen Stoffwechselvorgänge in Gang, bei denen Wärme freigesetzt wird. Mit Hilfe des Endoskops 30 und der Kamera 31 wird die Veränderung der Würzeoberfläche 6 im Verlauf des Gärprozesses beobachtet. Das Signal der Kamera 31 wird über die Signalleitung 33 an den Computer 35 geliefert. Zur Beobachtung sendet der Computer 35 in vorgegebenen Intervallen Signale an die Kamera 31 ihren Betrieb aufzunehmen bzw. wieder zu beenden. Typischerweise können diese Intervalle einige Stunden betragen. Andere Zeitintervalle oder eine kontinuierliche Beobachtung sind jedoch auch denkbar. Die Oberfläche der Würze verändert in charakteristischer Weise ihr Aussehen. Nach einigen Stunden bilden sich an der Oberfläche weiße Bläschen, die sich am Rand des Gärtankes 3 ausbreiten. Im folgenden bildet sich eine Schicht auf der Oberfläche, die sich im Verlauf der Zeit kräuselt und Schaum bildet. Der Verlauf ist hier nur beispielhaft geschildert, verschiedene Arten von Würze bzw. Hefe können andere Verläufe hervorrufen. Der zu erwartende Verlauf kann z.B. aus vorherigen Experimenten ermittelt werden. Das Signal der Kamera 31, das auf dem Bildschirm 36 gezeigt wird, kann dementsprechend Aufschluß über den Verlauf des Gärprozesses und dessen Güte geben. Ebenso kann die Veränderung der Oberfläche betrachtet werden, um die Schnelligkeit des Gärprozesses zu beurteilen.

Die Temperatur der gärenden Würze muß im Bereich von einigen Grad Celsius gehalten werden. Da bei der Gärung Wärme entsteht, wird der Gärtank gekühlt. In Abhängigkeit des Bildes, das auf dem Bildschirm 36 angezeigt wird, kann eine Bedienperson die Ventile 13, 15, 17 bedarfsweise öffnen und die Kühlung einschalten bzw. verstärken oder verringern. Auf diese Weise ist eine direkte Beeinflussung des Gärprozesses möglich, auch wenn, wie im gezeigten Ausführungsbeispiel ein geschlossener Tank eingesetzt wird und eine direkte Beobachtung nicht möglich ist.

Während der Beobachtung mit dem Endoskop 30 ist die Lampe 34 eingeschaltet, damit eine ausreichende Helligkeit für die Bildaufnahme in dem Gärtank 3 vorliegt.

Eine Vergrößerung des Bildausschnittes, den die Oberfläche 6 einnimmt, ist ein Indiz für eine verstärkte Schaumbildung in dem Gärtank 3. Dann kann durch Steuerung der CO₂-Abführung, z.B. der Druck erhöht werden, um die Schaumbildung zu verringern. Dazu kann eine entsprechende Pumpe in an sich bekannter Weise vorgesehen sein. Auch hierdurch läßt sich der Gärprozeß direkt beeinflussen, obwohl eine direkte Beobachtung bei einem geschlossenen Gärtank nicht möglich ist.

Das Signal der Kamera 31 kann auch zur automatischen Regelung der Gärparameter eingesetzt werden. Dazu wird die Steuerung von dem Computer 35 vollständig übernommen. Ein Bediener kann die Parameter der zu gärenden Substanz 4 über die Tastatur 45 in den Computer 35 eingeben. In dem Computer können entsprechende Referenzangaben gespeichert sein, die Aussagen über die zu erwartende Farbe der Oberfläche 6 der Würze 4 bei verschiedenen Gärprozessen enthalten. Ebenso können charakteristische Formen gespeichert sein, die sich an verschiedenen Zeitpunkten des Gärprozesses auf der Oberfläche finden lassen sollten.

Nachdem die Würze mit der Hefe in den Gärtank 3 eingebracht ist, sendet der Computer 35 in vorgewählten Intervallen ein Signal über die Leitung 33 an die Kamera 31, so daß diese intervallweise Aufnahmen von der Würzeoberfläche 6 macht. Synchron dazu sendet der Computer über die Signalleitung 37H ein Signal an die Stromversorgung 51 der Lampe 34, so daß während der Aufnahme im Gärtank 3 eine ausreichende Helligkeit herrscht. Bei fortlaufendem Gärprozeß ändert sich wie oben beschrieben die Oberfläche der gärenden Substanz 4. Der Computer 35 kann die Oberfläche 6 oder einzelne Bereiche davon farblich erfassen und mit den Referenzangaben im Speicher vergleichen. Auf diese Weise kann der Computer den fortlaufenden Gärprozeß überwachen. Zusätzlich kann durch entsprechende bildverarbeitende Prozesse, die an sich bekannt sind, die Form einzelner Strukturen bestimmt werden und mit den im Speicher abgelegten Strukturen verglichen werden, die für den Gärprozeß zu verschiedenen Zeitpunkten charakteristisch sind. Wird eine solche erwartete Struktur bzw. Farbe zu einem vorgegebenen Zeitpunkt nicht erreicht, so kann der Computer 35 ein Warnsignal erzeugen, um eine Bedienperson zu wamen, daß der Gärprozeß in unerwünschterweise abläuft. Ebenso können andere Prozeßstörungen festgestellt werden, wie z.B. eine zu große Schaumbildung, wodurch die Oberfläche der 6 der Würze 4 näher an den Aufnahmebereich 30a des Endoskops kommt und dementsprechend das Bild zu einem größeren Teil ausfüllt, was gut mit einem Computer 35 in bekannter Weise über bildanalytische Verfahren festgestellt werden kann.

Abweichend von der Ausführungsform, bei dem durch den Computer 35 ein Wamsignal erzeugt wird, kann der Computer auch direkt die Regelung der Gärparameter übernehmen. Zeigt die Auswertung der Bilder der Oberfläche 6 der gärenden Substanz 4, daß die Gärung eine zu hohe Temperatur erzeugt, gibt der Computer ein Signal an eines oder mehrere der Ventile 13, 15, 17 über die Signalleitungen 37A, 37B oder 37C, den Kühlmittellauf durch die Kühlschlangen 7, 9 oder 11 zuzulassen bzw. zu vergrößern. Ändert sich die Oberfläche 6 dann in gewünschter Weise, kann ein entsprechendes Signal vom Computer 35 die Ventile wieder schließen bzw. den Durchfluß verringern.

Zeigt die Auswertung der Bilder eine zu große Schaumbildung, so kann der Computer durch Schließen des Gasventiles 24 das Austreten von Kohlendioxid so steuem, daß die Schaumbildung zu reduziert wird. Dies geschieht solange, bis die Schaumbildung in einem tolerierbaren Maß ist, was durch Vergleich mit entsprechend in dem Speicher des Computers 35 abgelegten Werten geschieht.

Auf diese Weise ist eine vollständige Regelung des Gärprozesses in der Art eines Regelkreises möglich, ohne daß eine Bedienperson von außen eingreifen müßte.

Selbstverständlich kann in die Auswertung und Regelung durch den Computer 35 Signale von anderen Meßgeräten mit einbezogen werden, die in bekannter Weise an bzw. in dem Gärtank 3 vorgesehen sind, z.B. Extraktmeßgeräte bzw. Temperatursensoren.

Zusätzlich zu dem beschriebenen Auswerten des optischen Signales im sichtbaren Bereich kann eine Kamera 31 vorgesehen sein, die auch den infraroten Spektralbereich abdeckt. Eine Infrarotaufnahme der Oberfläche 6 der Würze 4 gibt direkten Aufschluß über die Wärmeverteilung in der Würze. Daraus läßt sich die absolute Temperatur und die Notwendigkeit, ob die Kühlung verstärkt bzw. reduziert werden muß, bestimmen. Das Infrarotbild kann ebenso von dem Computer 35 ausgewertet und zur Regelung herangezogen werden. Aus dem Infrarotbild läßt sich zudem Information über die Konvektion innerhalb des Gärtankes 3 gewinnen. Während einer Infrarotaufnahme ist es nicht nötig, daß die Lampe 34 betrieben wird.

Obwohl die Würze in dem Gärtank 3 nicht direkt beobachtet wird, kann dementsprechend ein optimaler Gärverlauf erreicht werden, was zu einer Energieeinsparung, z.B. bei dem Kühlprozeß, und zu einer Zeitersparnis führt.

Ist der Gärprozeß abgeschlossen, was auch durch Auswertung der entsprechenden optischen Signale durch den Computer 35 festgestellt werden kann, so kann die vergorene Würze 4 aus dem Tank 3 abgeführt werden. Alternativ dazu kann auch zuerst eine Lagerung in dem Gärtank durchgeführt werden. Während dieser Lagerung kann ebenso eine optische Beobachtung zur Überwachung mit Hilfe der erfindungsgemäßen Aufnahmeeinrichtung durchgeführt werden.

Nach Abschluß des Gärprozesses bzw. der Lagerungszeit, wird die gegorene Substanz 4 durch die Leitung 47 und das Ventil 49 abgeführt. Im Anschluß daran wird der Gärtank 3 gereinigt, um einen weiteren Gärprozeß vorzubereiten. Während der Gärung haben sich an der Innenwand des Tankes 3 Ablagerungen gebildet. Im speziellen in Höhe des Oberflächenspiegels 6 bilden sich am Rand Rückstände, sogenannte Brandhefe. Zur Entfernung dieser und anderer Rückstände wird durch den Sprühkopf 29 der Zuführungsleitung 27 Wasser in den Gärtank eingesprüht. Dazu wird das Ventil 28 geöffnet. Während dieses Reinigungsprozesses wird das Innere des Gärtankes 3 mit Hilfe des Endoskops 30 und der Kamera 31 aufgenommen und das entsprechende optische Signal über die Leitung 33 an den Computer 35 gegeben, der es auf dem Bildschirm 36 darstellt. Eine Bedienperson kann durch Beobachtung des Inneren des Gärtankes auf dem Bildschirm 36 beurteilen, ob die Reinigung bereits ausreichend ist und den Reinigungsprozeß entsprechend beenden. Ebenso kann entschieden werden, ob eine stärkere Wasserzufuhr nötig ist, d.h., das Ventil 28 weiter geöffnet werden muß.

Abweichend hiervon kann auch der Computer 35 das von der Kamera 31 übermittelte Bild während des Reinigungsprozesses direkt verarbeiten und entsprechenderweise wie oben für den Gärprozeß beschrieben durch bildanalytische Verfahren bzw. Referenzvergleiche feststellen, ob der Reinigungsprozeß ausreichend ist. So kann ein Bild des sauberen Tankes von dem aktuellen Bild, das von der Kamera 31 übermittelt wird, abgezogen werden, um bei Unterschieden zwischen diesen beiden Aufnahmen den Reinigungsprozeß weiter fortzusetzen. Ist der Tank schließlich sauber, so sind die verglichenen Bilder gleich und der Reinigungsprozeß wird von dem Computer 35 unterbrochen, indem das Ventil 28 geschlossen wird. Ebenso wie oben für den Gärungsprozeß beschrieben, kann die Kamera entweder intervallweise oder kontinuierlich betrieben werden. Um ein optisches Bild im sichtbaren Bereich zu erhalten, wird während der Kamerabetriebszeit die Lampe 34 eingeschaltet, wozu der Computer ein Signal über die die Signalleitung 37H an die Stromversorgung 51 schickt.

Mit der erfindungsgemäßen Aufnahmeeinrichtung für den Gärtank ist es dementsprechend möglich, den Reinigungsprozeß zu optimieren. Dementsprechend kann Zeit und Energie eingespart werden, was zu einer größeren Wirtschaftlichkeit und Effektivität führt.

Abweichend von der beschriebenen Ausführungsform kann auch ein offener Gärtank eingesetzt werden, da auch dort eine Automatisierung des Gärprozesses wünschenswert ist und eine direkte Beobachtung schwierig sein kann.

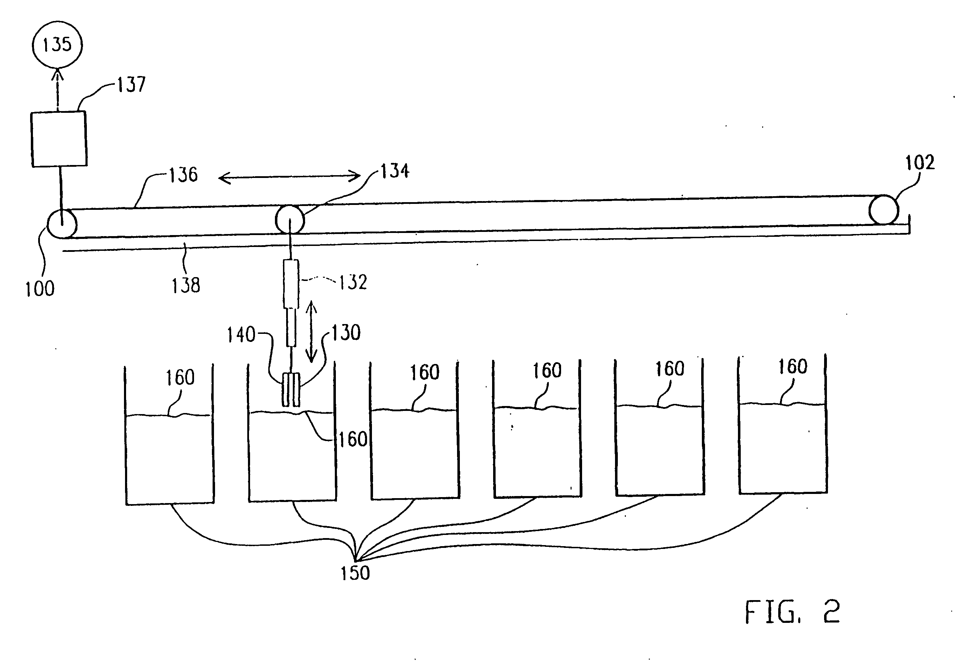

In Figur 2 ist die Gärprozeß-Steuerung in einer Anlage mit mehreren Gärgefäßen 150 schematisch dargestellt. In diesen Gärgefäßen befindet sich zu gärende Flüssigkeit mit der Oberfläche 160. Die in diesen Gärgefäßen stattfindenden Prozesse entsprechen den oben für das Gärgefäß der Figur 1 beschriebenen Prozesse. Figur 2 zeigt jedoch eine Ausführung mit offenen Gärgefäßen 150.

Oberhalb der Gärgefäße 150 ist eine Schiene 138 angeordnet, auf der eine Rolle 134 läuft, die von einem Antriebsband 136, das um Umlenkrollen 100, 102 läuft, angetrieben wird. Der Antrieb für die angetriebene Umlenkrolle 100 ist mit einem Computer 135 verbunden. Bei der gezeigten Ausführungsform übemimmt dieser Computer 135 dieselbe Funktion zur Auswertung wie der oben beschriebene Computer 35. Zusätzlich übernimmt er die Steuerung der Aufnahmeeinrichtung 130 mit Hilfe des Motors 137, der kraftschlüssig in bekannter Weise mit der Rolle 100 verbunden ist.

An der Antriebsrolle 134 hängt eine Aufnahmeeinrichtung an einer Teleskopeinrichtung 132. Diese Teleskopeinrichtung 132 hängt über eine Steuerleitung, die in der Figur nicht gezeigt ist, mit dem Computer 135 zusammen, der die Höhenverstellung der Aufnahmeeinrichtung 130 mit Hilfe der Teleskopeinrichtung 132 steuert. Die Aufnahmeeinrichtung 130 kann z.B. eine Kamera oder eine Infrarotkamera sein, die ihre Signale ebenso an den Computer 135 zur Auswertung schickt.

Zusammen mit der Aufnahmeeinrichtung 130 ist an der Teleskopeinrichtung 132 eine Leuchteinrichtung 140 befestigt, die zur Beleuchtung der Oberfläche 160 des jeweils zu inspizierenden Gärtanks dient.

Die Kamera 130 wird von dem Computer 135 über den Antrieb der Umlenkrolle 100 zur Aufnahme des Inneren der einzelnen Gärgefäße 150 bewegt. Nach Aufnahme eines Bildes im ersten Gärgefäß wird die Teleskopeinrichtung 132 eingefahren, die Rolle 134 entlang der Schiene zum nächsten Gärgefäß verfahren und die Teleskopeinrichtung 132 wieder ausgefahren, um die Kamera in Aufnahmeposition in das entsprechende Gärgefäß abzusenken. Die Aufnahme und Auswertung der Bilder der Oberfläche der gärenden Substanz wird jeweils von dem Computer 35 auf dieselbe Art und Weise verarbeitet, wie oben für den Computer 135 im Falle eines einzelnen Gärtanks beschrieben.

Die Leuchteinrichtung 140 wird dabei immer dann vom Computer 135 in Betrieb genommen, wenn die Kamera 130 in Aufnahmeposition ist. Nimmt die Kamera im infraroten Bereich auf, so ist eine Leuchteinrichtung nicht notwendig.

Die Fortbewegung der Kamera 131 kann dabei in periodischen Abständen von dem Computer 135 vorgegeben werden oder durch einen Benutzer ausgelöst werden, um ein spezielles Gärgefäß beobachten zu können.

Bei automatischer Fortbewegung wird am Computer 135 z.B. auf einem Bildschirm zusätzlich angegeben, welches der Gärgefäße gerade in Beobachtung ist.

Auf diese Weise ist in übersichtlicher Art die Steuerung des Gärprozesses in verschiedenen Gärgefäßen eines Gärkellers möglich, wobei nur eine einzelne Aufnahmeeinrichtung eingesetzt werden muß. Da in den seltensten Fällen eine kontinuierliche Beobachtung aller Gärgefäße gleichzeitig notwendig ist, bietet dieses Verfahren eine signifikante Erspamis und Vereinfachung des Gärprozesses und des Überwachungsprozesses.

In der Figur 2 sind offene Gärgefäße dargestellt. Auch in einem Gärkeller mit geschlossenen Gärgefäßen läßt sich das Verfahren vorteilhaft einsetzen, wenn die geschlossenen Gärgefäße Schaugläser aufweisen, durch die mit der Kamera 130 hindurch aufgenommen werden kann. Die Schaugläser müssen dabei eine entsprechende Größe aufweisen oder in einer ausreichenden Anzahl je Gärtank vorhanden sein, so daß auch eine Beleuchtung möglich ist, wenn im optischen Bereich aufgenommen werden soll.

Figur 2 zeigt eine Ausführungsform, in der die Gärtanks 150 eines Gärkellers in Reihe aufgestellt sind und sich eine Schiene 138 darüber befindet. Sind mehrere Reihen von Gärtanks in einem Gärkeller vorhanden, so muß die Schiene selbstverständlich diesen Reihen entsprechend folgen. Altemativ können mehrere Schienen mit einer entsprechenden Anzahl von Aufnahmeeinrichtungen vorgesehen sein.

Anstelle der Schiene 138 mit den entsprechenden Antriebsrollen kann auch ein Roboter eingesetzt werden, der die Aufnahmeeinrichtung von einem Gärtank 150 zum anderen Gärtank 150 bewegt. Dieser Roboter kann dann auch die Höhenverstellung übernehmen, die in der Ausführungsform der Figur 2 mit Hilfe der Teleskopeinrichtung 132 erreicht wird. Mit einem solchen Roboter kann schnell und flexibel auf die speziellen Erfordemisse des jeweiligen Gärprozesses reagiert werden.

In analoger Weise wie oben für den Fall eines einzelnen Gärtanks beschrieben, kann die Vorrichtung zur Steuerung des Gärprozesses in mehreren Gärtanks auch bei der Reinigung der Gärtanks bzw. bei der Lagerung der gegorenen Substanz eingesetzt werden.

Bei den oben beschriebenen Beispielen wird die Regelung des Gärprozesses anhand der Einstellung der Temperatur bzw. Kühlleistung und des Druckes beschrieben. Sind andere regelbare Komponenten vorgesehen, so kann deren Regelung ebenso von dem Computer 35 bzw. 135 übernommen werden.

Die oben beschriebenen Beispiele behandeln die Gärung von Würze zu Bier. Die erfindungsgemäßen Verfahren und die erfindungsgemäßen Vorrichtungen sind jedoch ebenso bei der Herstellung anderer Produkte einsatzbar, bei denen ein Gärprozeß stattfindet.

Die erfindungsgemäßen Verfahren, das erfindungsgemäße Gärgefäß und die erfindungsgemäße Vorrichtung ermöglichen eine Optimierung des Gärprozesses einschließlich des Reinigungsprozesses des Gärgefäßes bzw. der Gärgefäße, wodurch die Wirtschaftlichkeit und die Güte des Gärprozesses erhöht werden.

## Patentansprüche

1. Verfahren zur Steuerung des Gärprozesses, insbesondere bei der Getränkeherstellung,
**dadurch gekennzeichnet, daß**
vom Inneren des Gärgefäßes (3) kontinuierlich oder in Intervallen mit einer optischen Aufnahmeeinrichtung (30, 31) vom oberen Bereich aus optische Signale aufgenommen werden, die während des Gärprozesses die Oberfläche (6) der gärenden Substanz (4) oder - bei leerem Gärgefäß (3) - den Boden und einen Teil der Seitenwände des Inneren des Gärgefäßes (3) darstellen, und die Signale zur Steuerung des Gärprozesses verwendet werden.

2. Verfahren nach Anspruch 1, **dadurch gekennzeichnet, daß** der Gärprozeß in einem geschlossenen Kessel (3) durchgeführt wird.

3. Verfahren nach einem der Ansprüche 1 und 2, **dadurch gekennzeichnet, daß** die optischen Signale mit einer Kamera (31) aufgenommen werden.

4. Verfahren nach einem der Ansprüche 1 bis 3, **dadurch gekennzeichnet, daß** die optischen Signale mit Hilfe eines Endoskops (30), das in das Gärgefäß (3) geführt ist, aufgenommen werden.

5. Verfahren nach einem der Ansprüche 1 bis 4, **dadurch gekennzeichnet, daß** die optischen Signale zumindest im sichtbaren Spektralbereich aufgenommen werden und das Innere des Gärgefäßes (3) während der Aufnahme des optischen Signales beleuchtet wird.

6. Verfahren nach einem der Ansprüche 1 bis 5, **dadurch gekennzeichnet, daß** die optischen Signale den infraroten Spektralbereich umfassen.

7. Verfahren nach einem der Ansprüche 1 bis 6, **dadurch gekennzeichnet, daß** die Höhenlage der Aufnahmeeinrichtung (30, 31) zur Aufnahme der optischen Signale in Abhängigkeit der Höhe der aufzunehmenden Oberfläche (6) eingestellt wird.

8. Verfahren nach einem der Ansprüche 1 bis 7, **dadurch gekennzeichnet, daß** zur Überwachung der Gärung die optischen Signale ausgewertet werden, die von der Oberfläche (6) der gärenden Substanz (4) aufgenommen werden.

9. Verfahren nach Anspruch 8, **dadurch gekennzeichnet, daß** das Gärgefäß (3) in Abhängigkeit der optischen Signale gekühlt wird.

10. Verfahren nach Anspruch 2 und einem der Ansprüche 8 und 9, **dadurch gekennzeichnet, daß** der Druck im Gärgefäß (3) in Abhängigkeit der optischen Signale geregelt wird.

11. Verfahren nach einem der Ansprüche 8 bis 10, **dadurch gekennzeichnet, daß** zur Auswertung der optischen Signale die Farbe einzelner Bereiche der Oberfläche (6) oder der gesamten Oberfläche (6) der gärenden Substanz (4) analysiert werden.

12. Verfahren nach einem der Ansprüche 8 bis 11, **dadurch gekennzeichnet, daß** zur Auswertung der optischen Signale die Textur einzelner Bereiche der Oberfläche (6) oder der gesamten Oberfläche (6) der gärenden Substanz (4)analysiert werden.

13. Verfahren nach einem der Ansprüche 1 bis 12, **dadurch gekennzeichnet, daß** zur Steuerung des Gärprozesses neben den optischen Signalen auch andere gemessene Parameter mit einbezogen werden.

14. Verfahren nach einem der Ansprüche 1 bis 13, **dadurch gekennzeichnet, daß** der Gärprozeß auch die an die Gärung anschließende Lagerung der gegorenen Substanz umfaßt.

15. Verfahren nach einem der Ansprüche 1 bis 7, **dadurch gekennzeichnet, daß** die Aufnahme der optischen Signale vor dem Befüllen bzw. nach dem Entleeren des Gärgefäßes eingesetzt wird, um die vorbereitende Reinigung des Gärgefäßes (3) zu überwachen.

16. Verfahren nach Anspruch 15, **dadurch gekennzeichnet, daß** zur Reinigung in dem Gärgefäß (3) eine Flüssigkeit versprüht wird, deren Menge in Abhängigkeit der optischen Signale bestimmt wird.

17. Verfahren nach einem der Ansprüche 1 bis 16, **dadurch gekennzeichnet, daß** die optischen Signale elektronisch verarbeitet und ausgewertet werden.

18. Verfahren nach Anspruch 17, **dadurch gekennzeichnet, daß** die Auswertung der optischen Signale durch Vergleich mit vorgegebenen Referenzangaben durchgeführt wird.

19. Verfahren nach einem der Ansprüche 17 und 18, **dadurch gekennzeichnet, daß** zur Auswertung der optischen Signale bildanalytische Verfahren eingesetzt werden.

20. Verfahren nach einem der Ansprüche 17 bis 19, **dadurch gekennzeichnet, daß** die optischen Signale zur Erzeugung eines Wamsignales eingesetzt werden, wenn die Auswertung ein Ergebnis ergibt, das einen Prozeßfehler andeutet.

21. Verfahren nach einem der Ansprüche 1 bis 20, **dadurch gekennzeichnet, daß** der Gärprozeß das Gären der Würze bei der Bierherstellung umfaßt.

22. Gärgefäß zur Durchführung des Verfahrens nach Anspruch 1, mit wenigstens einer optischen Aufnahmeeinrichtung (30, 31), die in einer Höhe im Gärgefäß (3) angeordnet ist, die während des Gärprozesses oberhalb der gärenden Substanz (4) liegt, zur Aufnahme der Oberfläche (6) der gärenden Substanz (4) oder - bei leerem Gärgefäß (3) - des Bodens und eines Teiles der Seitenwande des Inneren des Gärgefäßes (3).

23. Gärgefäß nach Anspruch 22, **dadurch gekennzeichnet, daß** das Gärgefäß einen geschlossenen Tank (3) umfaßt.

24. Gärgefäß nach Anspruch 23, **dadurch gekennzeichnet, daß** der geschlossene Tank ein zylindro-konischer Tank (3) ist.

25. Gärgefäß nach einem der Ansprüche 22 bis 24, **dadurch gekennzeichnet, daß** die optische Aufnahmeeinrichtung eine Kamera (31) umfaßt.

26. Gärgefäß nach Anspruch 25, **dadurch gekennzeichnet, daß** die Kamera eine Mikrokamera innerhalb des Gärgefäßes (3) umfaßt.

27. Gärgefäß nach einem der Ansprüche 22 bis 25, **dadurch gekennzeichnet, daß** die optische Aufnahmeeinrichtung ein Endoskop (30) umfaßt, das in das Gärgefäß (3) geführt ist.

28. Gärgefäß nach einem der Ansprüche 22 bis 27, **gekennzeichnet durch** mindestens eine Leuchteinrichtung (34) im Inneren des Gärgefäßes (3), wobei die Aufnahmeeinrichtung (30, 31) zumindest den sichtbaren Spektralbereich aufnehmen kann.

29. Gärgefäß nach einem der Ansprüche 22 bis 28, **dadurch gekennzeichnet, daß** die optische Aufnahmeeinrichtung (30, 31) den infraroten Spektralbereich aufnehmen kann.

30. Gärgefäß nach einem der Ansprüche 22 bis 29, **gekennzeichnet durch** eine Sprühanlage (27, 29) zur Reinigung des Inneren des Gärgefäßes (3).

31. Gärgefäß nach einem der Ansprüche 22 bis 30, **dadurch gekennzeichnet, daß** die Höhe der Aufnahmeeinrichtung (30, 31) in dem Gärgefäß (3) verstellbar ist.

32. Gärgefäß nach Anspruch 31, **gekennzeichnet durch** eine Teleskopeinrichtung zur Höhenverstellung der Aufnahmeeinrichtung (30, 31).

33. Gärgefäß nach einem der Ansprüche 22 bis 32, **gekennzeichnet durch** eine Auswerteeinrichtung (35) zur Verarbeitung der Signale der optischen Aufnahmeeinrichtung (30, 31).

34. Gärgefäß nach Anspruch 33, **dadurch gekennzeichnet, daß** die Auswerteeinrichtung (35) eine Bildanzeige (36) umfaßt.

35. Gärgefäß nach einem der Ansprüche 33 und 34, **dadurch gekennzeichnet, daß** die Auswerteeinrichtung (35) einen Mikroprozessor umfaßt.

36. Gärgefäß nach Anspruch 35, **dadurch gekennzeichnet, daß** der Mikroprozessor die Aufnahmeeinrichtung zum intervallweisen Betrieb ansteuert.

37. Gärgefäß nach einem der Ansprüche 35 und 36, **dadurch gekennzeichnet, daß** der Mikroprozessor eine Regelkreiseinheit umfaßt.

38. Gärgefäß nach Anspruch 37, **gekennzeichnet durch** eine Speichereinrichtung zum Ablegen von Referenzdaten für die optischen Signale der Aufnahmeeinrichtung (30, 31).

39. Gärgefäß nach einem der Ansprüche 37 und 38, **dadurch gekennzeichnet, daß** der Mikroprozessor mit den Kühlaggregaten (7, 9, 11, 13, 15, 17) bzw. deren Steuerungsaggregate des Gärgefäßes (3) verbunden ist, um die Temperatur in dem Gärgefäß (3) regeln zu können.

40. Gärgefäß nach Anspruch 23 und einem der Ansprüche 37 bis 39, **dadurch gekennzeichnet, daß** der Mikroprozessor mit zumindest einem Gasventil (24) oder dessen Steuerung verbunden ist, mit dessen Hilfe der Druck in dem Gärgefäß (3) verändert werden kann, um den Druck in dem Gärgefäß (3) zu regeln.

41. Verfahren zur Steuerung der Gärprozesse, insbesondere bei der Getränkeherstellung, in einer Vielzahl von Gärgefäßen, die entweder geschlossen und mit mindestens einem Schauglas versehen oder offen sind, wobei zur Steuerung des Gärprozesses innerhalb der einzelnen Gärgefäße (150) ein Verfahren nach einem der Ansprüche 1 bis 21 eingesetzt wird, und wobei mindestens eine bewegliche Aufnahmeeinrichtung (130) für die Vielzahl der Gärgefäße (150) eingesetzt wird.

42. Verfahren nach Anspruch 41, **dadurch gekennzeichnet, daß** die mindestens eine Aufnahmeeinrichtung (130) von einem Roboter transportiert wird, um Aufnahmen des Inneren einzelner Gärbehälter (150) zu machen.

43. Verfahren nach Anspruch 41, **dadurch gekennzeichnet, daß** die mindestens eine Aufnahmeeinrichtung (130) auf einer Schieneneinrichtung (100, 102, 132, 134, 136, 138) oberhalb der Gärtanks (150) verfahren wird, um das Innere der einzelnen Gärtanks (150) aufzunehmen.

44. Verfahren nach einem der Ansprüche 41 bis 43, insoweit offene Gärbehälter eingesetzt werden, **dadurch gekennzeichnet, daß** die mindestens eine Aufnahmeeinrichtung (130) zur Aufnahme des Inneren eines Gärbehälters jeweils in dessen Inneres abgesenkt wird.

45. Vorrichtung zur Steuerung der Gärprozesse in einer Vielzahl von Gärgefäßen, die entweder geschlossen und mit mindestens einem Schauglas versehen oder offen sind, zur Durchführung des Verfahrens nach Anspruch 41, mit wenigstens einer optischen Aufnahmeeinrichtung (130) und mindestens einer Transporteinrichtung (100, 102, 132, 134, 136, 138), die derart ausgestaltet ist, daß sie die Aufnahmeeinrichtung (130) zur Aufnahme des Inneren der einzelnen Gärgefäße (150) transportieren kann, so daß die Aufnahme der Oberfläche (160) der gärenden Substanz in dem jeweiligen Gärkessel oder - bei leerem Gärgefäß (150) - des Bodens und eines Teiles der Seitenwände des jeweiligen Gärgefäßes möglich ist.

46. Vorrichtung nach Anspruch 45, **dadurch gekennzeichnet, daß** die Vielzahl von Gärgefäßen geschlossene zylindro-konische Tanks umfaßt.

47. Vorrichtung nach einem der Ansprüche 45 und 46, **dadurch gekennzeichnet, daß** die mindestens eine optische Aufnahmeeinrichtung eine Kamera (130) umfaßt.

48. Vorrichtung nach einem der Ansprüche 45 bis 47, **gekennzeichnet durch** mindestens eine Leuchteinrichtung (140) mit der mindestens eine Aufnahmeeinrichtung (130) transportiert wird, wobei die Aufnahmeeinrichtung (130) zumindest den sichtbaren Spektralbereich aufnehmen kann, und die Leuchteinrichtung (140) das Innere des aufgenommenen Gärbehälters beleuchtet.

49. Vorrichtung nach einem der Ansprüche 45 bis 48, **dadurch gekennzeichnet, daß** die mindestens eine optische Aufnahmeeinrichtung (130) den infraroten Spektralbereich aufnehmen kann.

50. Vorrichtung nach einem der Ansprüche 45 bis 49, **gekennzeichnet durch** Sprühanlagen zur Reinigung des Inneren der Gärgefäße (150).

51. Vorrichtung nach einem der Ansprüche 45 bis 50, **dadurch gekennzeichnet, daß** die Höhe der mindestens einen Aufnahmeeinrichtung (130) verstellbar ist.

52. Vorrichtung nach Anspruch 51, **gekennzeichnet durch** eine Teleskopeinrichtung (132) zur Höhenverstellung der mindestens einen Aufnahmeeinrichtung (130).

53. Vorrichtung nach einem der Ansprüche 45 bis 52, **dadurch gekennzeichnet, daß** die Transporteinrichtung einen Roboter zum Transport der mindestens einen Aufnahmeeinrichtung (130) von einem der Gärgefäße zum anderen umfaßt.

54. Vorrichtung nach einem der Ansprüche 45 bis 52, **dadurch gekennzeichnet, daß** die Transporteinrichtung eine Schieneneinrichtung (100, 102, 132, 134, 136, 138) zum Transport der mindestens einen Aufnahmeeinrichtung (130) von einem Gärgefäß zum anderen umfaßt.

55. Vorrichtung nach einem der Ansprüche 45 bis 54, **gekennzeichnet durch** eine Auswerteeinrichtung (135) zur Verarbeitung der Signale der mindestens einen optischen Aufnahmeeinrichtung (130).

56. Vorrichtung nach Anspruch 55, **dadurch gekennzeichnet, daß** die Auswerteeinrichtung (135) mindestens eine Bildanzeige umfaßt.

57. Vorrichtung nach einem der Ansprüche 55 und 56, **dadurch gekennzeichnet, daß** die Auswerteeinrichtung (135) einen Mikroprozessor umfaßt.

58. Vorrichtung nach Anspruch 57, **dadurch gekennzeichnet, daß** der Mikroprozessor die mindestens eine Aufnahmeeinrichtung (130) zum intervallweisen Betrieb ansteuert.

59. Vorrichtung nach einem der Ansprüche 57 und 58, **dadurch gekennzeichnet, daß** der Mikroprozessor mindestens eine Regelkreiseinheit umfaßt.

60. Vorrichtung nach einem der Ansprüche 57 bis 59, **gekennzeichnet durch** eine Speichereinrichtung zum Ablegen von Referenzdaten für die optischen Signale der mindestens einen Aufnahmeeinrichtung (130).

61. Vorrichtung nach einem der Ansprüche 59 und 60, **dadurch gekennzeichnet, daß** der Mikroprozessor mit den Kühlaggregaten bzw. deren Steuerungsaggregaten der Gärgefäße (150) verbunden ist, um die Temperatur in den Gärgefäßen (150) regeln zu können.

62. Vorrichtung nach einem der Ansprüche 59 bis 61, **dadurch gekennzeichnet, daß** - im Falle von geschlossenen Gärbehältern - der Mikroprozessor mit zumindest einem Gasventil je Gärgefäß oder dessen Steuerung verbunden ist, so daß der Druck in dem jeweiligen Gärgefäß (150) verändert werden kann, um den Druck in dem jeweiligen Gärgefäß zu regeln.

63. Vorrichtung nach einem der Ansprüche 57 bis 62, **dadurch gekennzeichnet, daß** der Mikroprozessor (135) derart ausgestaltet ist, daß er zusätzlich die Steuerung der Transporteinrichtung (100, 102, 132, 134, 136, 138) übemimmt.

## Claims

1. Method for controlling the fermentation process, in particular in beverage production,
**characterized in that**
optical signals of the interior of the fermentation vessel (3) are recorded continuously or at intervals from the upper region by an optical recording device (30, 31), the said optical signals showing the surface (6) of the fermenting substance (4) during the fermentation process or - when the fermentation vessel (3) is empty - showing the bottom and part of the side walls of the interior of the fermentation vessel (3), and the signals are used to control the fermentation process.

2. Method according to Claim 1, **characterized in that** the fermentation process is carried out in a closed kettle (3) .

3. Method according to either of Claims 1 and 2, **characterized in that** the optical signals are recorded by a camera (31).

4. Method according to one of Claims 1 to 3, **characterized in that** the optical signals are recorded using an endoscope (30) which is passed into the fermentation vessel (3).

5. Method according to one of Claims 1 to 4, **characterized in that** the optical signals are recorded at least in the visible spectral range, and the interior of the fermentation vessel (3) is illuminated during recording of the optical signal.

6. Method according to one of Claims 1 to 5, **characterized in that** the optical signals are in the infrared spectral range.

7. Method according to one of Claims 1 to 6, **characterized in that** the vertical position of the recording device (30, 31) for recording the optical signals is set as a function of the height of the surface (6) which is to be recorded.

8. Method according to one of Claims 1 to 7, **characterized in that** the optical signals which are recorded from the surface (6) of the fermenting substance (4) are evaluated for the purpose of monitoring the fermentation.

9. Method according to Claim 8, **characterized in that** the fermentation vessel (3) is cooled as a function of the optical signals.

10. Method according to Claim 2 and either of Claims 8 and 9, **characterized in that** the pressure in the fermentation vessel (3) is controlled as a function of the optical signals.

11. Method according to one of Claims 8 to 10, **characterized in that** the colours of individual regions of the surface (6) or of the entire surface (6) of the fermenting substance (4) are analysed for the purpose of evaluating the optical signals.

12. Method according to one of Claims 8 to 11, **characterized in that** the texture of individual regions of the surface (6) or of the entire surface (6) of the fermenting substance (4) are analysed for the purpose of evaluating the optical signals.

13. Method according to one of Claims 1 to 12, **characterized in that**, in addition to the optical signals, other measured parameters are also included for controlling the fermentation process.

14. Method according to one of Claims 1 to 13, **characterized in that** the fermentation process also comprises the storage of the fermented substance following fermentation.

15. Method according to one of Claims 1 to 7, **characterized in that** the optical signals are recorded before the fermentation vessel is filled or after it is emptied, in order to monitor the preparatory cleaning of the fermentation vessel (3).

16. Method according to Claim 15, **characterized in that** a liquid whose quantity is determined as a function of the optical signals is sprayed for cleaning in the fermentation vessel (3).

17. Method according to one of Claims 1 to 16, **characterized in that** the optical signals are processed and evaluated electronically.

18. Method according to Claim 17, **characterized in that** the optical signals are evaluated by being compared with predefined reference information.

19. Method according to either of Claims 17 and 18, **characterized in that** image analysis methods are used for the purpose of evaluating the optical signals.

20. Method according to one of Claims 17 to 19, **characterized in that** the optical signals are used to generate a warning signal when the evaluation produces a result which indicates a process error.

21. Method according to one of Claims 1 to 20, **characterized in that** the fermentation process comprises the fermentation of the wort in beer production.

22. Fermentation vessel for carrying out the method according to Claim 1, having at least one optical recording device (30, 31), which is arranged in the fermentation vessel (3) at a height which is above the fermenting substance (4) during the fermentation process, for recording the surface (6) of the fermenting substance (4) or - when the fermentation vessel (3) is empty - the bottom and part of the side walls of the interior of the fermentation vessel (3).

23. Fermentation vessel according to Claim 22, **characterized in that** the fermentation vessel comprises a closed tank (3) .

24. Fermentation vessel according to Claim 23, **characterized in that** the closed tank is a cylindroconical tank (3).

25. Fermentation vessel according to one of Claims 22 to 24, **characterized in that** the optical recording device comprises a camera (31).

26. Fermentation vessel according to Claim 25, **characterized in that** the camera comprises a microcamera within the fermentation vessel (3) .

27. Fermentation vessel according to one of Claims 22 to 25, **characterized in that** the optical recording device comprises an endoscope (30) which is passed into the fermentation vessel (3).

28. Fermentation vessel according to one of Claims 22 to 27, **characterized by** at least one lighting device (34) in the interior of the fermentation vessel (3), wherein the recording device (30, 31) can record at least the visible spectral range.

29. Fermentation vessel according to one of Claims 22 to 28, **characterized in that** the optical recording device (30, 31) can record the infrared spectral range.

30. Fermentation vessel according to one of Claims 22 to 29, **characterized by** a spray arrangement (27, 29) for cleaning the interior of the fermentation vessel (3).

31. Fermentation vessel according to one of Claims 22 to 30, **characterized in that** the height of the recording device (30, 31) in the fermentation vessel (3) can be adjusted.

32. Fermentation vessel according to Claim 31, **characterized by** a telescopic device for adjusting the height of the recording device (30, 31).

33. Fermentation vessel according to one of Claims 22 to 32, **characterized by** an evaluation device (35) for processing the signals of the optical recording device (30, 31).

34. Fermentation vessel according to Claim 33, **characterized in that** the evaluation device (35) comprises an image display means (36).

35. Fermentation vessel according to either of Claims 33 and 34, **characterized in that** the evaluation device (35) comprises a microprocessor.

36. Fermentation vessel according to Claim 35, **characterized in that** the microprocessor actuates the recording device for intermittent operation.

37. Fermentation vessel according to either of Claims 35 and 36, **characterized in that** the microprocessor comprises a control loop unit.

38. Fermentation vessel according to Claim 37, **characterized by** a memory device for storing reference data for the optical signals of the recording device (30, 31).

39. Fermentation vessel according to either of Claims 37 and 38, **characterized in that** the microprocessor is connected to the cooling units (7, 9, 11, 13, 15, 17), or their control units, of the fermentation vessel (3), in order to be able to control the temperature in the fermentation vessel (3).

40. Fermentation vessel according to Claim 23 and one of Claims 37 to 39, **characterized in that** the microprocessor is connected to at least one gas valve (24) or its controller, and the pressure in the fermentation vessel (3) can be varied using this gas valve in order to control the pressure in the fermentation vessel (3).

41. Method for controlling the fermentation process, in particular in beverage production, in a multiplicity of fermentation vessels which are either closed and provided with at least one viewing window or are open, wherein a method according to one of Claims 1 to 21 is employed for controlling the fermentation process within the individual fermentation vessels (150), and wherein at least one moveable recording device (130) is used for the multiplicity of fermentation vessels (150).

42. Method according to Claim 41, **characterized in that** the at least one recording device (130) is transported by a robot, in order to make recordings of the interior of individual fermentation containers (150).

43. Method according to Claim 41, **characterized in that** the at least one recording device (130) is moved on a rail arrangement (100, 102, 132, 134, 136, 138) above the fermentation tanks (150), in order to record the interior of the individual fermentation tanks (150).

44. Method according to one of Claims 41 to 43 where open fermentation containers are used, **characterized in that** the at least one recording device (130) is lowered into the interior of each fermentation container in order to record its interior.

45. Apparatus for controlling the fermentation process in a multiplicity of fermentation vessels which are either closed and provided with at least one viewing window or are open, for carrying out the method according to Claim 41, having at least one optical recording device (130) and at least one transporting device (100, 102, 132, 134, 136, 138) which is designed in such a way that it can transport the recording device (130) for recording the interior of the individual fermentation vessels (150) so that it is possible to record the surface (160) of the fermenting substance in the respective fermentation kettle or - when the fermentation vessel (150) is empty - the bottom and part of the side walls of the respective fermentation vessel.

46. Apparatus according to Claim 45, **characterized in that** the multiplicity of fermentation vessels comprise closed cylindroconical tanks.

47. Apparatus according to either of Claims 45 and 46, **characterized in that** the at least one optical recording device comprises a camera (130).

48. Apparatus according to one of Claims 45 to 47, **characterized by** at least one lighting device (140) with which at least one recording device (130) is transported, wherein the recording device (130) can record at least the visible spectral range, and the lighting device (140) illuminates the interior of the recorded fermentation container.

49. Apparatus according to one of Claims 45 to 48, **characterized in that** the at least one optical recording device (130) can record the infrared spectral range.

50. Apparatus according to one of Claims 45 to 49, **characterized by** spray arrangements for cleaning the interior of the fermentation vessels (150).

51. Apparatus according to one of Claims 45 to 50, **characterized in that** the height of the at least one recording device (130) can be adjusted.

52. Apparatus according to Claim 51, **characterized by** a telescopic device (132) for adjusting the height of the at least one recording device (130).

53. Apparatus according to one of Claims 45 to 52, **characterized in that** the transporting device comprises a robot for transporting the at least one recording device (130) from one of the fermentation vessels to the other.

54. Apparatus according to one of Claims 45 to 52, **characterized in that** the transporting device comprises a rail arrangement (100, 102, 132, 134, 136, 138) for transporting the at least one recording device (130) from one fermentation vessel to the other.

55. Apparatus according to one of Claims 45 to 54, **characterized by** an evaluation device (135) for processing the signals of the at least one optical recording device (130) .

56. Apparatus according to Claim 55, **characterized in that** the evaluation device (135) comprises at least one image display means.

57. Apparatus according to either of Claims 55 and 56, **characterized in that** the evaluation device (135) comprises a microprocessor.

58. Apparatus according to Claim 57, **characterized in that** the microprocessor actuates the at least one recording device (130) for intermittent operation.

59. Apparatus according to either of Claims 57 and 58, **characterized in that** the microprocessor comprises at least one control loop unit.

60. Apparatus according to one of Claims 57 to 59, **characterized by** a memory device for storing reference data for the optical signals of the at least one recording device (130).

61. Apparatus according to either of Claims 59 and 60, **characterized in that** the microprocessor is connected to the cooling units, or their control units, of the fermentation vessels (150), in order to be able to control the temperature in the fermentation vessels (150).

62. Apparatus according to one of Claims 59 to 61, **characterized in that** - in the case of closed fermentation containers - the microprocessor is connected to at least one gas valve for each fermentation vessel, or its controller, so that the pressure in the respective fermentation vessel (150) can be varied in order to control the pressure in the respective fermentation vessel.

63. Apparatus according to one of Claims 57 to 62, **characterized in that** the microprocessor (135) is designed in such a way that it additionally takes over control of the transporting device (100, 102, 132, 134, 136, 138) .

## Revendications

1. Procédé destiné à contrôler le processus de fermentation, en particulier dans la fabrication de boissons,
**caractérisé en ce que**,
de l'intérieur de la cuve de fermentation (3) sont enregistrés de manière continue ou par intervalles avec un dispositif d'enregistrement optique (30, 31), à partir de la zone supérieure, des signaux optiques qui pendant le processus de fermentation représentent la surface (6) de la substance en cours de fermentation (4) ou - lorsque la cuve de fermentation (3) est vide - le fond et une partie des parois latérales de l'intérieur de la cuve de fermentation (3), et les signaux sont utilisés pour contrôler le processus de fermentation.

2. Procédé selon la revendication 1, **caractérisé en ce que** le processus de fermentation est réalisé dans une cuve (3) fermée.

3. Procédé selon l'une des revendications 1 et 2, **caractérisé en ce que** les signaux optiques sont enregistrés avec une caméra (31).

4. Procédé selon l'une des revendications 1 à 3, **caractérisé en ce que** les signaux optiques sont enregistrés à l'aide d'un endoscope (30) qui est introduit dans la cuve de fermentation (3).

5. Procédé selon l'une des revendications 1 à 4, **caractérisé en ce que** les signaux optiques sont enregistrés au moins dans la zone visible du spectre et l'intérieur de la cuve de fermentation (3) est éclairé pendant l'enregistrement des signaux optiques.

6. Procédé selon l'une des revendications 1 à 5, **caractérisé en ce que** les signaux optiques comprennent la zone infrarouge du spectre.

7. Procédé selon l'une des revendications 1 à 6, **caractérisé en ce que** la position en hauteur du dispositif d'enregistrement (30, 31) destiné à enregistrer les signaux optiques est réglée en fonction de la hauteur de la surface (6) à enregistrer.

8. Procédé selon l'une des revendications 1 à 7, **caractérisé en ce que** pour surveiller la fermentation, on analyse les signaux optiques qui sont enregistrés de la surface (6) de la substance en cours de fermentation (4).

9. Procédé selon la revendication 8, **caractérisé en ce que** la cuve de fermentation (3) est refroidie en fonction des signaux optiques.

10. Procédé selon la revendication 2 et l'une des revendications 8 et 9, **caractérisé en ce que** la pression dans la cuve de fermentation (3) est régulée en fonction des signaux optiques.

11. Procédé selon l'une des revendications 8 à 10, **caractérisé en ce que** pour analyser les signaux optiques, on analyse la couleur de zones individuelles de la surface (6) ou de la surface (6) totale de la substance en cours de fermentation (4).

12. Procédé selon l'une des revendications 8 à 11, **caractérisé en ce que** pour analyser les signaux optiques, on analyse la texture de zones individuelles de la surface (6) ou de la surface (6) totale de la substance en cours de fermentation (4).

13. Procédé selon l'une des revendications 1 à 12, **caractérisé en ce que** pour contrôler le processus de fermentation, d'autres paramètres mesurés sont également pris en compte, outre les signaux optiques.

14. Procédé selon l'une des revendications 1 à 13, **caractérisé en ce que** le processus de fermentation comprend également le stockage de la substance fermentée, faisant suite à la fermentation.

15. Procédé selon l'une des revendications 1 à 7, **caractérisé en ce que** l'enregistrement des signaux optiques est mis en oeuvre avant l'aération ou après la vidange de la cuve de fermentation, afin de surveiller le nettoyage préparatoire de la cuve de fermentation (3) .

16. Procédé selon l'une des revendications 15, **caractérisé en ce que** pour le nettoyage, un liquide est pulvérisé dans la cuve de fermentation (3), dont la quantité est déterminée en fonction des signaux optiques.

17. Procédé selon l'une des revendications 1 à 16, **caractérisé en ce que** les signaux optiques sont traités et analysés électroniquement.

18. Procédé selon la revendication 17, **caractérisé en ce que** l'analyse des signaux optiques est réalisée par comparaison avec les indications de référence données.

19. Procédé selon l'une des revendications 17 et 18, **caractérisé en ce que** des procédés d'analyse d'images sont employés pour analyser les signaux optiques.

20. Procédé selon l'une des revendications 17 à 19, **caractérisé en ce que** les signaux optiques sont employés pour générer un signal d'alarme, lorsque l'analyse donne un résultat qui suggère une erreur dans le processus.

21. Procédé selon l'une des revendications 1 à 20, **caractérisé en ce que** le processus de fermentation comprend la fermentation du moût dans la fabrication de la bière.

22. Cuve de fermentation destinée à la mise en oeuvre du procédé selon la revendication 1, comportant au moins un dispositif d'enregistrement (30, 31), qui est disposé dans la cuve de fermentation (3) à une hauteur qui se situe au-dessus de la substance en cours de fermentation (4) pendant le processus de fermentation, pour enregistrer la surface (6) de la substance en cours de fermentation (4) ou - lorsque la cuve de fermentation (3) est vide - le fond et une partie des parois latérales de l'intérieur de la cuve de fermentation (3).

23. Cuve de fermentation selon la revendication 22, **caractérisée en ce que** la cuve de fermentation (3) comprend une cuve fermée (3).

24. Cuve de fermentation selon la revendication 23, **caractérisée en ce que** la cuve fermée est une cuve cylindrique-conique (3).

25. Cuve de fermentation selon l'une des revendications 22 **à 24, caractérisée en ce que** le dispositif d'enregistrement optique comprend une caméra (31).

26. Cuve de fermentation selon la revendication 25, **caractérisée en ce que** la caméra comprend une microcaméra à l'intérieur de la cuve de fermentation (3).

27. Cuve de fermentation selon l'une des revendications 22 à 25, **caractérisée en ce que** le dispositif d'enregistrement optique comprend un endoscope (30), qui est introduit dans la cuve de fermentation (3).

28. Cuve de fermentation selon une des revendications 22 à 27, **caractérisée par** au moins un dispositif d'éclairage (34) à l'intérieur de la cuve de fermentation (3), le dispositif d'enregistrement (30, 31) pouvant enregistrer au moins la zone visible du spectre.

29. Cuve de fermentation selon l'une des revendications 22 à 28, **caractérisée en ce que** le dispositif d'enregistrement optique (30, 31) peut enregistrer la zone infrarouge du spectre.

30. Cuve de fermentation selon l'une des revendications 22 à 29, **caractérisée par** une installation de pulvérisation (27, 29) pour nettoyer l'intérieur de la cuve de fermentation (3).

31. Cuve de fermentation selon l'une des revendications 22 à 30, **caractérisée en ce que** la hauteur du dispositif d'enregistrement (30, 31) dans la cuve de fermentation (3) est réglable.

32. Cuve de fermentation selon la revendication 31,
**caractérisée par** un dispositif télescopique pour régler en hauteur le dispositif d'enregistrement (30, 31).

33. Cuve de fermentation selon l'une des revendications 22 à 32, **caractérisée par** un dispositif d'analyse (35) pour traiter les signaux du dispositif d'enregistrement (30, 31) optique.

34. Cuve de fermentation selon la revendication 33, **caractérisée en ce que** le dispositif d'analyse (35) comprend un écran (36).

35. Cuve de fermentation selon l'une des revendications 33 et 34, **caractérisée en ce que** le dispositif d'analyse (35) comprend un microprocesseur.

36. Cuve de fermentation selon la revendication 35, **caractérisée en ce que** le microprocesseur excite le dispositif d'analyse pour fonctionner par intervalles.

37. Cuve de fermentation selon l'une des revendications 35 et 36, **caractérisée en ce que** le microprocesseur comprend une unité de boucle de régulation.

38. Cuve de fermentation selon la revendication 37, **caractérisée par** un dispositif de stockage pour déposer les données de référence pour les signaux optiques du dispositif d'enregistrement (30, 31).

39. Cuve de fermentation selon l'une des revendications 37 et 38, **caractérisée en ce que** le microprocesseur est relié à des modules de refroidissement (7, 9, 11, 13, 15, 17) ou leurs modules de commande de la cuve de fermentation (3), afin de pouvoir réguler le température dans la cuve de fermentation (3).

40. Cuve de fermentation selon la revendication 23 et l'une des revendications 37 à 39, **caractérisée en ce que** le microprocesseur est relié à au moins une vanne de gaz (24) ou à la commande de celle-ci, à l'aide de laquelle il est possible de faire varier la pression dans la cuve de fermentation (3), afin de réguler la pression dans la cuve de fermentation (3).

41. Procédé de contrôle des processus de fermentation, en particulier dans la fabrication de boissons, dans une pluralité de cuves de fermentation, qui sont soit fermées et pourvues d'au moins un hublot, soit ouvertes, un procédé selon l'une des revendications 1 à 21 étant mis en oeuvre pour contrôler le processus de fermentation à l'intérieur des différentes cuves de fermentation (150), et au moins un dispositif d'enregistrement (130) mobile étant employé pour une pluralité des cuves de fermentation (150).

42. Procédé selon la revendication 41, **caractérisé en ce que** le au moins un dispositif d'enregistrement (130) est transporté par un robot, afin de faire des enregistrements de l'intérieur de cuves de fermentation (150) individuelles.

43. Procédé selon la revendication 41, **caractérisé en ce que** le au moins un dispositif d'enregistrement (130) est déplacé sur un dispositif de rails (100, 102, 132, 134, 136, 138) au-dessus de la cuve de fermentation (150), afin d'enregistrer l'intérieur des différentes cuves de fermentation (150).

44. Procédé selon l'une des revendication 41 à 43, dans la mesure où sont employées des cuves de fermentation ouvertes, **caractérisé en ce que** pour enregistrer l'intérieur d'une cuve de fermentation, le au moins un dispositif d'enregistrement (130) est abaissé respectivement à l'intérieur de celle-ci.

45. Dispositif de contrôle des processus de fermentation dans une pluralité de cuves de fermentation, qui sont soit fermées et pourvues d'au moins un hublot, soit ouvertes, pour mettre en oeuvre le procédé selon la revendication 41, comportant au moins un dispositif d'enregistrement (130) optique et au moins un dispositif de transport (100, 102, 132, 134, 136, 138) qui est conçu de telle façon qu'il peut transporter le dispositif d'enregistrement (130) pour enregistrer l'intérieur des différentes cuves de fermentation (150), de telle façon que l'enregistrement de la surface (160) de la substance en cours de fermentation dans la cuve de fermentation particulière ou - lorsque la cuve (150) est vide - du fond et d'une partie des parois latérales de la cuve de fermentation particulière est possible.

46. Dispositif selon la revendication 45, **caractérisé en ce que** la pluralité de cuves de fermentation comprend des cuves cylindriques-coniques.

47. Dispositif selon l'une des revendications 45 et 46, **caractérisé en ce que** le au moins un dispositif d'enregistrement optique comprend une caméra (130).

48. Dispositif selon l'une des revendications 45 à 47, **caractérisé par** au moins un dispositif d'éclairage (140) avec lequel au moins un dispositif d'enregistrement (130) est transporté, le dispositif d'enregistrement (130) pouvant enregistrer au moins la zone visible du spectre, et le dispositif d'éclairage (140) éclairant l'intérieur de la cuve de fermentation enregistrée.

49. Dispositif selon l'une des revendications 45 à 48, **caractérisé en ce que** le au moins un dispositif d'enregistrement (130) optique peut enregistrer la zone infrarouge du spectre.

50. Dispositif selon l'une des revendications 45 à 49, **caractérisé par** des installations de pulvérisation pour nettoyer l'intérieur des cuves de fermentation (150) .

51. Dispositif selon l'une des revendications 45 à 50, **caractérisé en ce que** la hauteur du au moins un dispositif d'enregistrement (130) est réglable.

52. Dispositif selon la revendication 51, **caractérisé par** un dispositif télescopique (132) pour déplacer en hauteur le au moins un dispositif d'enregistrement (130).

53. Dispositif selon l'une des revendications 45 à 52, **caractérisé en ce que** le dispositif de transport comprend un robot pour le transport du au moins un dispositif d'enregistrement (130) d'une cuve de fermentation à l'autre.

54. Dispositif selon l'une des revendications 45 à 52, **caractérisé en ce que** le dispositif de transport comprend un dispositif de rails (100, 102, 132, 134, 136, 138) pour transporter le au moins un dispositif d'enregistrement (130) d'une cuve de fermentation à l'autre.

55. Dispositif selon l'une des revendications 45 à 54, **caractérisé par** un dispositif d'analyse (135) pour traiter les signaux du au moins un dispositif d'enregistrement (130) optique.

56. Dispositif selon la revendication 55, **caractérisé en ce que** le dispositif d'analyse (135) comporte au moins un écran.

57. Dispositif selon l'une des revendications 55 et 56, **caractérisé en ce que** le dispositif d'analyse (135) comprend un microprocesseur.

58. Dispositif selon la revendication 57, **caractérisé en ce que** le microprocesseur excite le au moins un dispositif d'enregistrement (130) pour fonctionner par intervalles.

59. Dispositif selon l'une des revendications 57 et 58, **caractérisé en ce que** le microprocesseur comprend au moins une unité de boucle de régulation.

60. Dispositif selon l'une des revendications 57 à 59, **caractérisé par** un dispositif de stockage pour déposer des données de référence pour les signaux optiques du au moins un dispositif d'enregistrement (130).

61. Dispositif selon l'une des revendications 59 et 60, **caractérisé en ce que** le microprocesseur est relié aux modules de refroidissement ou à leurs modules de commande des cuves de fermentation (150), afin de pouvoir réguler la température dans les cuves de fermentation (150).

62. Dispositif selon l'une des revendications 59 à 61, **caractérisé en ce que** - dans le cas de cuves de fermentation fermées - le microprocesseur est relié à au moins une vanne de gaz par cuve de fermentation ou à la commande de celle-ci, de telle façon qu'il est possible de faire varier la pression dans la cuve de fermentation (150) particulière, afin de réguler la pression dans la cuve de fermentation particulière.

63. Dispositif selon l'une des revendications 57 à 62, **caractérisé en ce que** le microprocesseur (153) est conçu de telle façon qu'il assure en outre la commande du dispositif de transport (100, 102, 132, 134, 136, 138).
